# EUROPEAN PATENT SPECIFICATION

(11) **EP 2 177 397 B1**
(45) Date of publication and mention of the grant of the patent: **22.01.2014**
(21) Application number: 08425669.2
(22) Date of filing: 15.10.2008
(51) Int. Cl.: B60N 2/30

(54) **Vehicle seat, in particular for a third row of seats**
Fahrzeugsitz, insbesondere für eine dritte Sitzreihe
Siège de véhicule en particulier pour une troisième rangée de sièges

(43) Date of publication of application: 21.04.2010
(73) Proprietor: C.R.F. Società Consortile per Azioni, 10043 Orbassano (Torino) (IT)
(72) Inventor: Demontis, Salvatore, 10043 Orbassano (Torino) (IT); Virdis, Tiziana, 10043 Orbassano (Torino) (IT); Masoero, Giorgio, 10043 Orbassano (Torino) (IT); Boreanaz, Giovanni, 10043 Orbassano (Torino) (IT)
(74) Representative: Bergadano, Mirko

(56) References cited:
- EP-A- 1 270 315
- EP-A- 1 964 712
- WO-A-2004/043730
- DE-A1- 10 354 270
- DE-U1- 20 114 059
- FR-A- 2 589 800
- US-A- 5 383 699

## Description

The present invention relates to a vehicle seat, in particular for a third row in vehicles.

DE209512327U and W02004/043730 disclose seats that correspond to the preamble of Claim 1 and that can be closed from a configuration of use to a folded configuration by simply knocking down the backrest. In the folded configuration, the seat occupies an extremely small space. In particular, the sitting portion of the seat is connected to a floor of the vehicle via an articulated quadrilateral for displacement between a lowered position and a raised position. The backrest of the seat, instead, is hinged to a plate fixed to the frame of the sitting portion and is connected to the rear connecting rods of the quadrilateral via a transmission, in particular a gear transmission. In this way, rotation of the backrest is synchronized with rotation of the rear connecting rods.

To block the seat in the configuration of use, the solution disclosed in W02004/043730 envisages a cam device, which acts upon the gear transmission and is carried by the plate that connects the hinge of the backrest to the frame of the sitting portion. Said cam device is far from altogether satisfactory in so far as it includes a relatively high number of components and at times is difficult to unblock.

The aim of the present invention is to provide a vehicle seat, in particular for a third row of seats, that will enable a simple and inexpensive solution to the problems set forth above and, in particular, is extremely stable during advance of the vehicle in its configuration of use and its folded configuration.

According to the present invention, a vehicle seat is provided, in particular for a third row of seats, as defined in claim 1.

For a better understanding of the present invention, a preferred embodiment is now described, purely by way of nonlimiting example, with reference to the attached drawings, wherein:
- Figure 1 is a partial front perspective view of a preferred embodiment of the vehicle seat, in particular for a third row of seats, according to the present invention;
- Figure 2 is a side view of the seat of Figure 1;
- Figure 3 is similar to Figure 2 and illustrates the seat during a displacement towards a folded configuration;
- Figure 4 is similar to Figure 3 and illustrates, at an enlarged scale, a detail of the seat in a subsequent step of the displacement towards the folded configuration; and
- Figure 5 is similar to Figure 1 and illustrates the seat in the folded configuration.

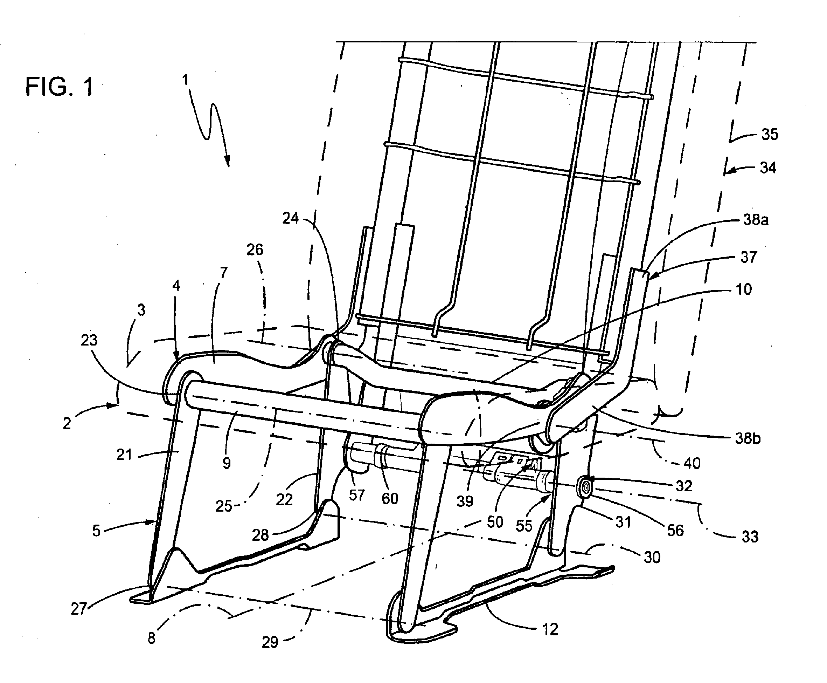

Designated as a whole by 1 in Figure 1 is a seat, in particular for a third row of seats in the passenger compartment of a vehicle (not illustrated).

The seat 1 comprises a sitting portion 2, which in turn comprises an external padding 3 and an internal frame 4, which is connected to a floor of the vehicle via an articulated quadrilateral 5. The frame 4 comprises: two side plates 7 elongated in a direction parallel to a longitudinal axis 8, corresponding to the direction of advance of the vehicle; and a front cross member 9 and a rear cross member 10, which conveniently have a circular cross section and have their ends connected via bushings (not illustrated) to the plates 7 so as to be able to turn about respective horizontal axes 25, 26 orthogonal to the axis 8.

According to a variant (not illustrated), an additional front cross member is provided, which connects the plates 7 so as to improve the behaviour of the seat 1 during possible accidents of the vehicle and to support the padding 3 better.

It is pointed out that here and in what follows the terms "front", "rear", "forwards", "backwards", "top", "bottom", etc., are used with reference to the direction of advance of the vehicle.

The articulated quadrilateral 5 is constituted by at least one front connecting rod and at least one rear connecting rod, which connect the frame 4 to an attachment structure 12 defined, for example, by plates or brackets fixed to the floor of the vehicle. According to a variant (not illustrated), the structure 12 is connected to the floor via a guide device to render the seat 1 slidable in a longitudinal direction.

Conveniently, the articulated quadrilateral 5 is constituted by a pair of front connecting rods 21 and a pair of rear connecting rods 22. The top ends of the connecting rods 21, 22 are designated by the reference numbers 23 and 24, respectively, and are fixed, respectively, to the cross members 9 and 10. Since the cross members 9, 10 are hinged to the plates 7 as mentioned above, the connecting rods 21, 22 can turn about the axes 25, 26.

The bottom ends of the connecting rods 21, 22 are designated by the reference numbers 27 and 28, respectively, and are hinged directly to the structure 12 about respective axes 29, 30, parallel to the axes 25, 26.

The articulated quadrilateral 5 renders the seat 1 movable between a configuration of use or unfolded configuration, in which the sitting portion 2 is raised with respect to the floor and the seat 1 defines a place for seating a passenger, and a folded or knocked-down configuration, in which the sitting portion 2 is lowered.

Preferably, the connecting rods 21 and 22 are defined by vertical plates. The connecting rods 21 have a rectilinear shape and a length that is preferably greater than that of the connecting rods 22 (by "length" is meant the distance between the axes 25, 29 and between the axes 26, 30). The connecting rods 22 comprise respective intermediate portions defining lobes 31 that project backwards, i.e., in a direction opposite to the sitting portion 2. The lobes 31 have respective circular seats 32, which are coaxial to one another along an axis 33 parallel to the axes 26, 30.

The seat 1 moreover comprises a backrest 34, which in turn comprises a top resting portion 35 defined by an external padding and by an internal frame. The backrest 34 comprises a bottom portion 36, defined by a shaped and rigid plate, which is aligned with the portion 35, is external to its padding and is fixed to its internal frame, for example via two rods.

The backrest 34 then comprises two connection brackets 37, which have a substantially L-shaped profile and comprise respective arms 38a fixed to the bottom end of the internal frame of the portion 35. The brackets 37 then comprise respective arms 38b, which are connected to the arms 38a, pass though and out of the padding 3, and at their external ends are hinged directly to an intermediate portion 39 of the plates 7, to enable the backrest 34 to be turned about an axis 40.

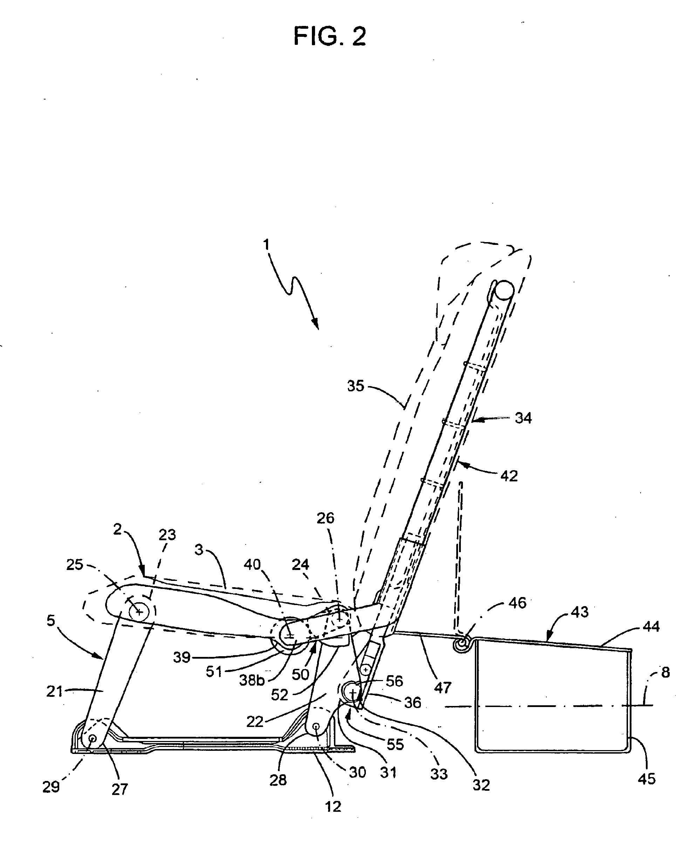

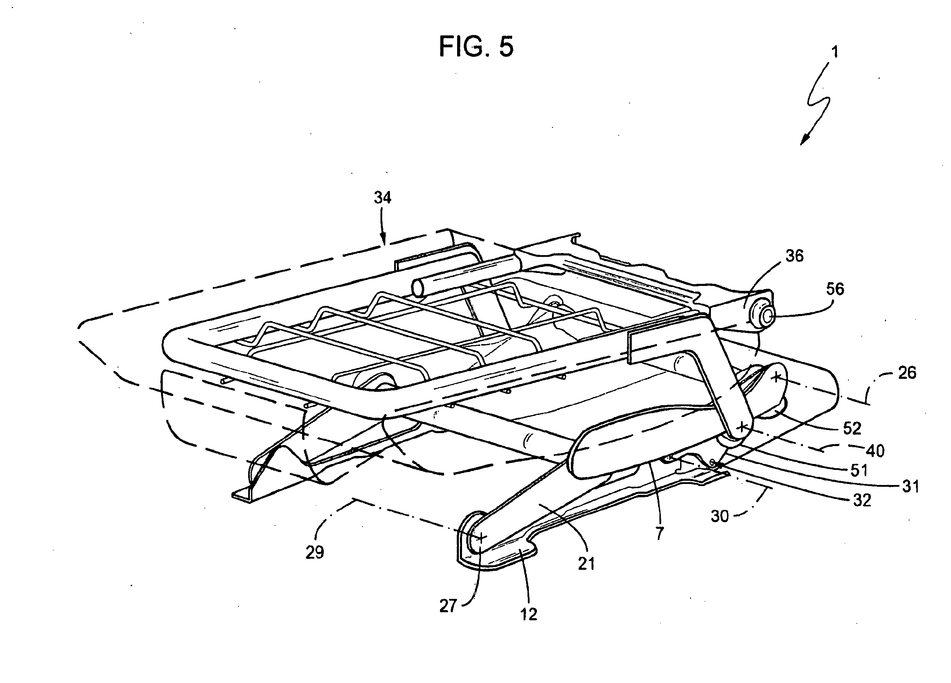

The axis 40 is consequently fixed with respect to the sitting portion 2, is parallel to the axes 26, 30, and is located below the axes 25 and 26. Furthermore, the axis 40 is located above the line that joins the axes 26, 30, when the seat 1 is located in the unfolded configuration (Figure 2), and below said line when the seat 1 is located in the folded configuration (Figure 5). Furthermore, the distance between the axes 26 and 33 is greater than the distance between the axes 26 and 40.

In the unfolded configuration, the portion 35 of the backrest 34 is substantially vertical (Figures 1 and 2). In the folded configuration (Figure 5), the portion 35 is in contact against the padding 3 and has a rear surface 42 that is substantially horizontal and is aligned with a surface 43 located in the boot of the vehicle (Figures 2-4). In particular, the surface 43 is defined by a hatch 44 that is provided for closing an underlying container 45 and is hinged, about an axis parallel to the axes 26, 30, to the sides of the boot or to the container 45, for being raised and for opening a top inlet of the container 45.

A flap 47 (Figure 2) is provided for covering the empty space between the seat 1 and the surface 43. The rear end of the flap 47 is hinged about a horizontal axis 46, which is parallel and preferably coincides with the hinge axis of the hatch 44, to turn from and towards a substantially horizontal reference position, in which the flap 47 defines a prolongation of the surface 43 and is resting against a fixed shoulder surface (not illustrated), carried by the body of the vehicle.

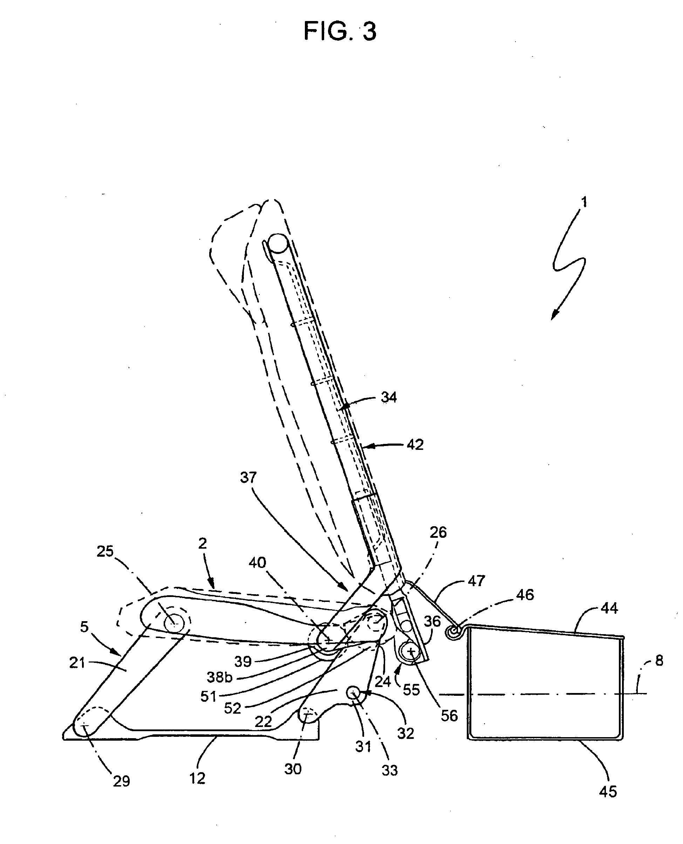

When the seat 1 is located in the unfolded configuration, the front end of the flap 47 is close horizontally to the backrest 34, occupies a position higher up than the axis 26, and is in a vertical position substantially intermediate between the portions 35 and 36. When the seat 1 is knocked down into the folded configuration (Figure 3), the sitting portion 2 is displaced backwards, but the front edge of the flap 47 does not hinder knocking-down of the seat 1, even though it remains always resting against the backrest 34. In fact, right from start of the movement towards the folded configuration, the portion 36 turns simultaneously and in a direction opposite to the rotation of the connecting rods 22 about the axis 30, pushes the front end of the flap 47 upwards and then turns the flap 47 about the axis 46 in an automatic way. Continuing the movement towards the folded configuration thanks to the path followed by the axis 40, the portion 36 drops and displaces backwards and, then, slides completely underneath the flap 47. The point of contact between the backrest 34 and the flap 47 always remains above the axis 46 of rotation, thus preventing sticking in the point of contact.

When the seat 1 reaches the folded configuration, the flap 47 (not illustrated in Figure 5) is again in its reference position and is located over the portion 36. The portion 36 is, in turn, located above the rear end of the sitting portion 2. The surface 42 and the flap 47 extend the surface 43 forwards in a continuous way, to enable even quite voluminous objects to be rested thereon.

Hence, in order to turn the flap 47 no additional manual intervention is necessary in so far as the intervention on the seat 1 is quite sufficient to configure also the flap 47 together with it. Preferably, a spring (not illustrated) is provided for pushing the flap 47 towards the reference position (in a counterclockwise direction as viewed in the figures) with an elastic force that is concordant with the weight of the flap 47.

As mentioned above, knocking-down of the backrest 34 is simultaneous with rotation of the connecting rods 21, 22 of the articulated quadrilateral 5 in so far as a transmission 50 connects the backrest 34 to at least one of the connecting rods 22. The transmission 50 synchronizes rotation of the backrest 34 about the axis 40 with rotation of the connecting rod 22 about the axis 26 so as to lower the sitting portion 2 in response to a rotation of the backrest 34 towards its substantially horizontal position and so as to raise the sitting portion 2 in response to a rotation of the backrest 34 towards its substantially vertical position.

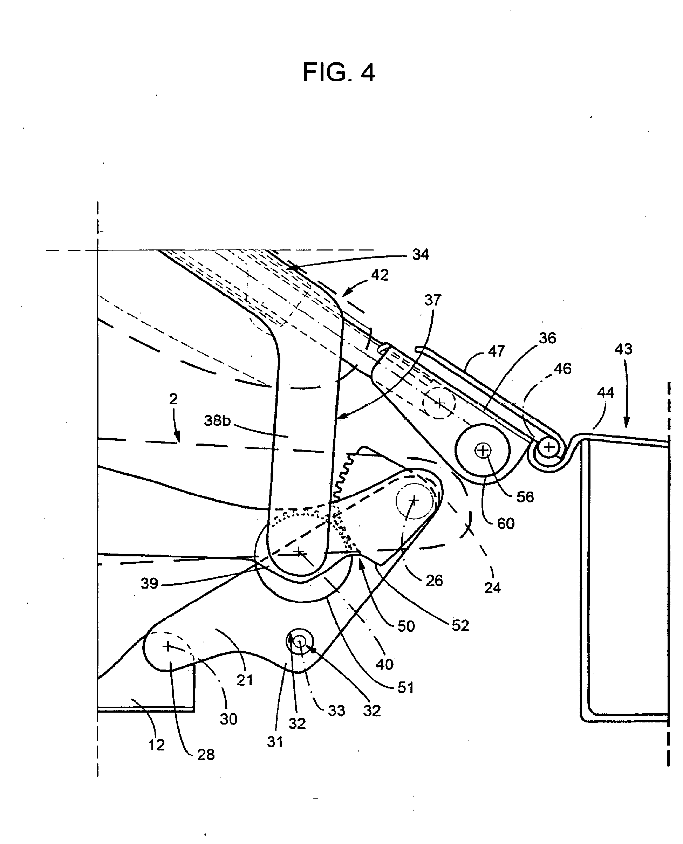

With reference to Figure 4, preferably the transmission 50 is of the gear type. The transmission 50 comprises a gear 51, which is coaxial with the axis 40 and is fixed to the arm 38b of one of the two brackets 37. In particular, the arm 38b and the gear 51 are located on opposite sides of the portion 39 of the plate 7, with the gear 51 located within the frame 4 (Figure 5). The transmission 50 then comprises a gear 52, which is fixed to the end 24 of one of the two connecting rods 22, is located between the end 24 and the corresponding plate 7, and is defined by a sector having a toothing coaxial with the axis 26. Consequently, the connecting rod 22, to which the gear 52 is fixed, is located in a more internal position in the frame 4 with respect to the vertical plane in which the gears 51, 52 lie.

Preferably, the gears 51, 52 mesh directly with one another, i.e., without transmission gears so that the sitting portion 2 is displaced backwards, whereas when the backrest 34 is lowered, it is turned down towards its substantially horizontal position. Furthermore, in the unfolded configuration, the connecting rods 22 are oriented backwards with respect to the vertical so that the vertical thrust of the sitting portion 2 generates on the connecting rods 22 a torque that is opposite to the torque transmitted by the transmission 50 and generated by the horizontal thrust of the back of the passenger against the backrest 34 during use.

With reference to Figures 1 and 5, a releasable-blocking device 55 is provided for keeping the seat 1 in the unfolded configuration. The device 55 comprises the seats 32 and two blocking members 56, which are located on both sides of the seat 1, are carried by the portion 36 of the backrest 34 and are movable between an engagement position, in which they are engaged in the seats 32, and a disengagement position, in which they leave the backrest 34 free to be sent down.

The members 56 are defined by pins that are parallel to the axis 33 and are axially slidable in respective sleeves 60. The sleeves 60 are fixed to the portion 36 and house respective springs (not illustrated), which push the pins 56 into the engagement position.

To displace the seat 1 into the unfolded configuration, it is simply necessary to raise the backrest 34 towards its substantially vertical position. When the tips of the pins 56 encounter the rear edges of the lobes 31, a lead-in surface (not illustrated), which is provided on said tips and/or on said edges, performs the function of guide or of wedge and automatically causes recession of the pins 56 in the sleeves 60 towards the disengagement position. At the end of raising of the backrest 34, when the pins 56 and the seats 32 are aligned along the axis 33, the springs cause the pins 56 to snap into the engagement position so as to withhold the seat 1 in a fixed position.

To leave the seat 1 free to return into the folded configuration, it is necessary to cause the pins 56 to withdraw into the disengagement position against the action of the springs. Said manoeuvre is performed via a manually actuated disengagement device (not illustrated), for example of the Bowden-cable type, carried by the backrest 34.

The seat 1 is kept in the folded configuration by its own weight. In this configuration, points for anchorage of the backrest 34 are not strictly necessary in so far as the position of the axis 40 underneath the line that joins the axes 26 and 30 enables the backrest 34 to be kept pressed downwards in the case of inertial forces, for example, in the case of an accident.

From the foregoing it appears evident how the device 55 has a relatively low number of components and is extremely simple. In fact, the device 55 does not act upon the transmission 50 and, at the same time, avoids the use of resting elements or retention systems between the structure 12 and the articulated quadrilateral 5, but simply adds a degree of constraint to the structure defined by the ensemble represented by the sitting portion, the backrest, and the articulated quadrilateral so as to render said structure statically indeterminable.

Furthermore, to engage the backrest 34 to the seats 32 it is not necessary to intervene manually directly on the device 55 in so far as the engagement of the pins 56 in the seats 32 is automatic thanks to the springs housed in the sleeves 60. If no lead-in surface were provided between the tips of the pins 56 and the rear edges of the lobes 31, it would in any case be sufficient to actuate the disengagement device carried by the backrest 34 manually, to cause the pins 56 first to withdraw via a "remote control" and then leave them free to snap into the seats 32.

Furthermore, the particular positions of the axes 40 and 33 enable a high stability of the seat 1 to be obtained in the unfolded and folded configurations, maintaining the torques or the stresses acting on the articulated quadrilateral 5 and on the transmission 50 low.

Furthermore, in the folded configuration, the seat 1 is extremely compact, appealing from the aesthetic standpoint, and above all functional in so far as it contributes to extending the surface 43 forwards.

Finally, it is clear that modifications and variations may be made to the seat 1 described and illustrated herein, without thereby departing from the scope of protection of the present invention, as defined in the annexed claims.

The transmission 50 could be different, for example it could envisage transmission gears between the gears 51, 52 or else be defined by a lever mechanism between the connecting rods 22 and the backrest 34.

Furthermore, elastic and/or damping devices, for example gas springs, could be provided for facilitating raising or lowering of the seat 1 between the unfolded and folded configurations.

Furthermore, for the sitting portion 2 and/or for the backrest 34, the external padding and the internal frame could be replaced by a single resting body made of plastic material and having a stiffness sufficient for supporting the passenger and for connecting to the articulated quadrilateral 5.

Instead of being fixed to the cross members 9, 10, the top ends 23, 24 of the connecting rods 21, 22 could have respective circular holes engaged, in such a way that they can turn, by the side ends of the cross members 9, 10.

According to the conditions of installation in the vehicle, for reasons of safety it could be necessary to envisage a mechanical blocking system to keep the seat stationary in the folded configuration.

## Claims

1. A vehicle seat (1), in particular for a third row of seats, comprising:
- attachment means (12), which can be connected to a floor of the vehicle;
- a sitting portion (2);
- an articulated quadrilateral (5) comprising at least one front connecting rod (21) and at least one rear connecting rod (22); said front and rear connecting rods (21, 22) comprising:
a) respective bottom ends (27, 28) hinged to said attachment means (12) about a bottom front axis (29) and, respectively, about a bottom rear axis (30); and
b) respective top ends (23, 24) hinged to said sitting portion (2) about a top front axis (25) and, respectively, about a top rear axis (26);
- a backrest (34), which can turn about a knock-down axis (40), which is fixed with respect to said sitting portion (2) and is parallel to and arranged at a distance from said top rear axis (26);
- a transmission (50), which connects said backrest (34) to said rear connecting rod (22) and synchronizes rotation of said backrest (34) about said knock-down axis (40) with rotation of said rear connecting rod (22) about said top rear axis (26) so as to configure the seat (1) between an unfolded configuration, in which said backrest (34) is substantially vertical and said sitting portion (2) is raised, and a folded configuration, in which said backrest (34) is substantially horizontal and said sitting portion (2) is lowered;
- releasable blocking means (55) for blocking the seat (1) in the unfolded configuration;
**characterized in that** said releasable blocking means (55) couple in a releasable way a terminal portion (36) of said backrest (34) to an intermediate portion (31) of said rear connecting rod (22).

2. The vehicle seat according to Claim 1, **characterized in that** said releasable blocking means (55) comprise:
- a retention seat (32) made in one (31) from between said intermediate portion and said terminal portion; and
- a blocking member (56), which is carried by the other (36) from between said intermediate portion and said terminal portion and is movable between an engagement position, in which it is engaged to said retention seat (32), and a disengagement position, in which it leaves said retention seat (32) free.

3. The vehicle seat according to Claim 2, **characterized by** comprising elastic means that push said blocking member (56) towards the engagement position.

4. The vehicle seat according to Claim 3, **characterized in that** one from between said blocking member (56) and said intermediate portion (31) has a lead-in surface, which shifts said blocking member (56) towards the disengagement position when it encounters the other from between said blocking member (56) and said intermediate portion (31) during displacement of the seat (1) towards the unfolded configuration.

5. The vehicle seat according to any one of the preceding claims, **characterized in that** said backrest (34) comprises:
- a resting portion (35) for the back of a passenger; and
- at least one connection bracket (37) comprising a first arm (38a) fixed to said resting portion (35) and a second arm (38b) hinged directly to said sitting portion (2).

6. The vehicle seat according to Claim 5, **characterized in that** said terminal portion (36) is aligned with said resting portion (35) and, when the seat (1) is located in the folded configuration, it is located over a rear end of said sitting portion (2).

7. The vehicle seat according to Claim 5 or 6, **characterized in that** said transmission (50) comprises:
- a first gear (51) coaxial with said knock-down axis (40) and fixed with respect to said second arm (38b); and
- a second gear (52) coaxial with said top rear axis (26) and fixed with respect to said rear connecting rod (22).

8. The vehicle seat according to Claim 7, **characterized in that** said first and second gears (51, 52) are pieces distinct from said connecting arm (37) and from said rear connecting rod (22).

9. The vehicle seat according to any one of the preceding claims, **characterized in that** the distance between said top rear axis (26) and the resting point defined by said releasable blocking means is greater than the distance between said top rear axis (26) and said knock-down axis (40).

10. The vehicle seat according to any one of the preceding claims, **characterized in that**, in the unfolded configuration, the downward thrust by said sitting portion (2) generates on said rear connecting rod (2) a torque that is opposite to the torque transmitted by said transmission (50) and generated by the horizontal thrust of the back of the passenger against said backrest (34) during use.

11. The vehicle seat according to any one of the preceding claims, **characterized in that** said knock-down axis (40) is located below said top front axis (25) and said top rear axis (26).

12. The vehicle seat according to any one of the preceding claims, **characterized in that**, in the folded configuration, said knock-down axis (40) is located below the line that joins said top rear axis (26) and bottom rear axis (30).

13. A vehicle comprising:
- a seat (1) made according to Claim 1; and
- a flap (47) for covering an empty space behind said seat (1) when the seat is located in the unfolded configuration; said flap having:
a) a rear end, hinged about a horizontal axis (46) orthogonal to the longitudinal direction (8) of advance of the vehicle, to turn from and into a substantially horizontal reference position, in which said flap (47) is resting against a fixed shoulder surface; and
b) a front end, which, in the unfolded configuration of the seat (1), is horizontally close to said backrest (34) and is located at a height greater than that of said terminal portion (36) of the backrest (34).

14. The vehicle according to Claim 13, **characterized in that** said terminal portion (36) turns in a direction opposite to the rotation of said rear connecting rods (22) about said bottom rear axis (30), and **in that**, in the folded configuration of the seat (1), said flap (47) is located in the reference position and is located over said terminal portion (36).

## Patentansprüche

1. Fahrzeugsitz (1), insbesondere für eine dritte Sitzreihe, umfassend:
- Befestigungsmittel (12), die mit einem Boden des Fahrzeugs verbunden werden können;
- ein Sitzteil (2);
- ein Gelenkviereck (5) mit mindestens einer vorderen Verbindungsstange (21) und mindestens einer hinteren Verbindungsstange (22), wobei die vorderen und hinteren Verbindungsstangen (21, 22) umfassen:
a) entsprechende untere Enden (27, 28), die an die Befestigungsmittel (12) um eine untere vordere Achse (29) beziehungsweise um eine untere hintere Achse (30) schwenkbar angelenkt sind, und
b) entsprechende obere Enden (23, 24), die gelenkig an dem Sitzteil (2) um eine obere vordere Achse (25) beziehungsweise um eine obere hintere Achse (26) schwenkbar angelenkt sind;
- eine Rückenlehne (34), die sich um eine Zusammenleg-Achse (40) drehen kann, die in Bezug auf den Sitzteil (2) fixiert und parallel und mit einem Abstand zu der obere hintere Achse (26) angeordnet ist;
- eine Übersetzung (50), die die Rückenlehne (34) mit der hinteren Verbindungsstange (22) verbindet und eine Drehung der Rückenlehne (34) um die Zusammenleg-Achse (40) mit der Drehung der hinteren Verbindungsstange (22) um die obere hintere Achse (26) synchronisiert, um so den Sitz (1) zwischen einer entfalteten Stellung, in der die Rückenlehne (34) im Wesentlichen vertikal ist und der Sitzabschnitt (2) angehoben ist, und einer eingefalteten Stellung, wobei die Rückenlehne (34) im Wesentlichen horizontal ist und der Sitzabschnitt (2) abgesenkt ist, zu konfigurieren;
- lösbare Blockiereinrichtungen (55) zum Blockieren des Sitzes (1) in der entfalteten Stellung;
**dadurch gekennzeichnet, dass** die lösbaren Blockiereinrichtungen (55) in lösbarer Weise ein Anschlussstück (36) der Rückenlehne (34) mit einem Zwischenstück (31) der hinteren Verbindungsstange (22) koppeln.

2. Fahrzeugsitz gemäß Anspruch 1, **dadurch gekennzeichnet, dass** die lösbaren Blockiereinrichtungen (55) umfassen:
- einen Rückhaltesitz (32), der in einem (31) aus der Gruppe umfassend das Zwischenstück und das Anschlussstück ausgeführt ist, und
- ein Blockierelement (56), das von dem anderen (36) aus der Gruppe umfassend das Zwischenstück und das Anschlussstück getragen wird und zwischen einer Eingriffsposition, in der es mit dem Rückhaltesitz (32) in Eingriff steht, und einer Loslösungsposition, in der es den Rückhaltesitz (32) frei lässt, beweglich ist.

3. Fahrzeugsitz gemäß Anspruch 2, **gekennzeichnet durch** elastische Mittel, die das Blockierelement (56) in Richtung der Eingriffsposition drücken.

4. Fahrzeugsitz gemäß Anspruch 3, **dadurch gekennzeichnet, dass** eines aus der Gruppe umfassend das Blockierelement (56) und das Zwischenstück (31) eine Einführoberfläche aufweist, die das Blockierelement (56) in Richtung der Loslösungsposition verschiebt, wenn es während der Bewegung des Sitzes (1) in die entfaltete Stellung auf das andere aus der Gruppe umfassend das Blockierelement (56) und das Zwischenstück (31) trifft.

5. Fahrzeugsitz gemäß einem der vorgenannten Ansprüche, **dadurch gekennzeichnet, dass** die Rückenlehne (34) umfasst:
- einen Lehnenteil (35) für den Rücken eines Fahrgastes, und
- zumindest eine Verbindungsklammer (37), die einen an dem Lehnenteil (35) befestigten ersten Arm (38a) sowie einen direkt an dem Sitzteil (2) angelenkten zweiten Arm (38b) aufweist.

6. Fahrzeugsitz gemäß Anspruch 5, **dadurch gekennzeichnet, dass** das Anschlussstück (36) mit dem Lehnenteil (35) fluchtet und sich über einem hinteren Ende des Sitzteils (2) befindet, wenn sich der Sitz (1) in der eingefalteten Stellung befindet.

7. Fahrzeugsitz gemäß Anspruch 5 oder 6, **dadurch gekennzeichnet, dass** die Übersetzung (50) umfasst:
- ein erstes Getriebe (51), das koaxial zur Zusammenleg-Achse (40) angeordnet und in Bezug auf den zweiten Arm (38b) fixiert ist, und
- ein zweites Getriebe (52), das koaxial zur oberen hinteren Achse (26) angeordnet und in Bezug auf die hintere Verbindungsstange (22) fixiert ist.

8. Fahrzeugsitz gemäß Anspruch 7, **dadurch gekennzeichnet, dass** es sich bei dem ersten und zweiten Getriebe (51, 52) um Teile handelt, die von dem Verbindungsarm (37) und von der hinteren Verbindungsstange (22) verschieden sind.

9. Fahrzeugsitz gemäß einem der vorgenannten Ansprüche, **dadurch gekennzeichnet, dass** der Abstand zwischen der oberen hinteren Achse (26) und dem durch die lösbaren Blockiereinrichtungen definierten Ruhepunkt größer ist als der Abstand zwischen der oberen hinteren Achse (26) und der Zusammenleg-Achse (40).

10. Fahrzeugsitz gemäß einem der vorgenannten Ansprüche, **dadurch gekennzeichnet, dass** in der entfalteten Stellung der nach unten gerichtete Schub des Sitzteils (2) an der hinteren Verbindungsstange (2) ein Drehmoment erzeugt, welches dem Drehmoment entgegengerichtet ist, das von der Übersetzung (50) übertragen und durch den horizontalen Schub des Fahrgastes erzeugt wird, wenn er während des Sitzens mit seinem Rücken gegen die Rückenlehne (34) drückt.

11. Fahrzeugsitz gemäß einem der vorgenannten Ansprüche, **dadurch gekennzeichnet, dass** sich die Zusammenleg-Achse (40) unterhalb der oberen vorderen Achse (25) und der oberen hinteren Achse (26) befindet.

12. Fahrzeugsitz gemäß einem der vorgenannten Ansprüche, **dadurch gekennzeichnet, dass** sich die Zusammenleg-Achse (40) in der eingefalteten Stellung unterhalb der Linie befindet, die die obere hintere Achse (26) mit der unteren hinteren Achse (30) verbindet.

13. Fahrzeug umfassend
- einen gemäß Anspruch 1 hergestellten Sitz (1) und
- eine Klappe (47) zur Abdeckung eines leeren Raumes hinter dem Sitz (1), wenn sich der Sitz in der entfalteten Stellung befindet, wobei die Klappe aufweist:
a) ein hinteres Ende, das um eine horizontale Achse (46), die orthogonal zur bevorzugten Längsrichtung (8) des Fahrzeugs angeordnet ist, schwenkbar angelenkt ist, so dass es aus einer bzw. in eine im Wesentlichen horizontale Referenzposition aus- bzw. eingeschwenkt werden kann, in der die Klappe (47) an einer fixierten Schulter-Fläche anliegt, und
b) ein vorderes Ende, das in der entfalteten Stellung des Sitzes (1) horizontal nahe der Rückenlehne (34) ist und sich auf einer Höhe befindet, die größer ist als die des Anschlussstückes (36) der Rückenlehne (34).

14. Fahrzeug gemäß Anspruch 13, **dadurch gekennzeichnet, dass** sich das Anschlussstück (36) in eine Richtung dreht, die der Drehung der hinteren Verbindungsstangen (22) um die untere hintere Achse (30) entgegengerichtet ist, und dass sich die Klappe (47) in der eingefalteten Stellung des Sitzes (1) in der Referenzposition und über dem Anschlussstück (36) befindet.

## Revendications

1. Siège de véhicule (1) en particulier pour une troisième rangée de sièges comprenant :
- des moyens de fixation (12) qui peuvent être raccordés à un plancher du véhicule ;
- une partie d'assise (2) ;
- un quadrilatère articulé (5) comprenant au moins une tige de raccordement avant (21) et au moins une tige de raccordement arrière (22) ; lesdites tiges de raccordement avant et arrière (21, 22) comprenant :
a) des extrémités inférieures (27, 28) respectives articulées par rapport auxdits moyens de fixation (12) autour d'un axe avant inférieur (29) et, respectivement, autour d'un axe arrière inférieur (30) ; et
b) des extrémités supérieures (23, 24) respectives articulées par rapport à ladite partie d'assise (2) autour d'un axe avant supérieur (25) et, respectivement, autour d'un axe arrière supérieur (26) ;
- un dossier (24) qui peut tourner autour d'un axe démontable (40) qui est fixé par rapport à ladite partie d'assise (2) et est parallèle à et agencé à une distance dudit axe arrière supérieur (26) ;
- une transmission (50) qui raccorde ledit dossier (34) à ladite tige de raccordement arrière (22) et synchronise la rotation dudit dossier (34) autour dudit axe démontable (40) avec la rotation de ladite tige de raccordement arrière (22) autour dudit axe arrière supérieur (26) afin de configurer le siège (1) entre une configuration dépliée dans laquelle ledit dossier (34) est sensiblement vertical et ladite partie d'assise (2) est levée, et une configuration pliée dans laquelle ledit dossier (34) est sensiblement horizontal et ladite partie de siège (2) est abaissée ;
- des moyens de blocage amovible (55) pour bloquer le siège (1) dans la configuration dépliée ;
**caractérisé en ce que** lesdits moyens de blocage amovible (55) couplent d'une manière amovible, une partie terminale (36) dudit dossier (34) à une partie intermédiaire (31) de ladite tige de raccordement arrière (22).

2. Siège de véhicule selon la revendication 1, **caractérisé en ce que** lesdits moyens de blocage amovible (55) comprennent :
- un siège de retenue (32) réalisé dans l'une (31) parmi ladite partie intermédiaire et ladite partie terminale ; et
- un élément de blocage (56) qui est porté par l'autre (36) parmi ladite partie intermédiaire et ladite partie terminale, et est mobile entre une position de mise en prise dans laquelle il est mis en prise avec ledit siège de retenue (32), et une position de dégagement dans laquelle il laisse ledit siège de retenue (32) libre.

3. Siège de véhicule selon la revendication 2, **caractérisé en ce qu'**il comprend des moyens élastiques qui poussent ledit élément de blocage (56) vers la position de mise en prise.

4. Siège de véhicule selon la revendication 3, **caractérisé en ce que** l'un parmi ledit élément de blocage (56) et ladite partie intermédiaire (31) a une surface d'attaque qui déplace ledit élément de blocage (56) vers la position de dégagement lorsqu'il rencontre l'autre parmi ledit élément de blocage (56) et ladite partie intermédiaire (31) pendant le déplacement du siège (1) vers la configuration dépliée.

5. Siège de véhicule selon l'une quelconque des revendications précédentes, **caractérisé en ce que** ledit dossier (34) comprend :
- une position de repos (35) pour le dos d'un passager ; et
- au moins une console de raccordement (37) comprenant un premier bras (38a) fixé sur ladite partie de repos (35) et un second bras (38b) articulé directement par rapport à ladite partie d'assise (2).

6. Siège de véhicule selon la revendication 5, **caractérisé en ce que** ladite partie terminale (36) est alignée avec ladite partie de repos (35) et, lorsque le siège (1) est positionné dans la configuration pliée, elle est positionnée sur une extrémité arrière de ladite partie d'assise (2).

7. Siège de véhicule selon la revendication 5 ou 6, **caractérisé en ce que** ladite transmission (50) comprend :
- un premier engrenage (51) coaxial par rapport audit axe démontable (40) et fixé par rapport audit second bras (38b) ; et
- un second engrenage (52) coaxial par rapport audit axe arrière supérieur (26) et fixé par rapport à ladite tige de raccordement arrière (22).

8. Siège de véhicule selon la revendication 7, **caractérisé en ce que** lesdits premier et second engrenages (51, 52) sont des pièces distinctes dudit bras de raccordement (37) et de ladite tige de raccordement arrière (22).

9. Siège de véhicule selon l'une quelconque des revendications précédentes, **caractérisé en ce que** la distance entre ledit axe arrière supérieur (26) et le point de repos défini par lesdits moyens de blocage amovible est supérieure à la distance entre ledit axe arrière supérieur (26) et ledit axe démontable (40).

10. Siège de véhicule selon l'une quelconque des revendications précédentes, **caractérisé en ce que**, dans la configuration dépliée, la poussée descendante réalisée par ladite partie d'assise (2) génère sur ladite tige de raccordement arrière (2), un couple qui est opposé au couple transmis par ladite transmission (50) et généré par une poussée horizontale du dos du passager contre ledit dossier (34), pendant l'utilisation.

11. Siège de véhicule selon l'une quelconque des revendications précédentes, **caractérisé en ce que** ledit axe démontable (40) est positionné au-dessous dudit axe avant supérieur (25) et dudit axe arrière supérieur (26).

12. Siège de véhicule selon l'une quelconque des revendications précédentes, **caractérisé en ce que**, dans la configuration pliée, ledit axe démontable (40) est positionné au-dessous de la ligne qui assemble ledit axe arrière supérieur (26) et l'axe arrière inférieur (30).

13. Véhicule comprenant :
- un siège (1) réalisé selon la revendication 1 ; et
- un rabat (47) pour recouvrir un espace vide derrière ledit siège (1) lorsque le siège est positionné dans la configuration dépliée ; ledit rabat ayant :
a) une extrémité arrière articulée autour d'un axe horizontal (46) orthogonal par rapport à la direction longitudinale (8) d'avancement du véhicule, pour revenir et se mettre dans une position de référence sensiblement horizontale, dans laquelle ledit rabat (47) repose contre une surface d'épaulement fixe ; et
b) une extrémité avant qui, dans la configuration dépliée du siège (1), est horizontalement proche dudit dossier (34) et est positionnée à une hauteur supérieure à celle de ladite partie terminale (36) du dossier (34).

14. Véhicule selon la revendication 13, **caractérisé en ce que** ladite partie terminale (36) tourne dans une direction opposée à la rotation desdites tiges de raccordement arrière (22) autour dudit axe arrière inférieur (30), et **en ce que**, dans la configuration pliée du siège (1), ledit rabat (47) est positionné dans la position de référence et est positionné sur ladite partie terminale (36).
